# EUROPÄISCHE PATENTSCHRIFT

(11) **EP 1 920 580 B1**
(45) Veröffentlichungstag und Bekanntmachung des Hinweises auf die Patenterteilung: **20.11.2013**
(21) Anmeldenummer: 06777923.1
(22) Anmeldetag: 24.07.2006
(51) Int. Cl.: H04M 1/247, H04M 7/00

(54) **VERFAHREN, ENDEINRICHTUNG UND KOMMUNIKATIONSSYSTEM ZUM BELEGEN EINER TASTE EINER KOMMUNIKATIONSENDEINRICHTUNG**
METHOD, TERMINAL DEVICE AND COMMUNICATION SYSTEM FOR PROGRAMMING A BUTTON OF A COMMUNICATION TERMINAL DEVICE
PROCEDE, EQUIPEMENT TERMINAL ET SYSTEME DE COMMUNICATION POUR AFFECTER UNE TOUCHE D'UN EQUIPEMENT TERMINAL DE COMMUNICATION

(30) Priorität: 31.08.2005 DE 102005041364
(43) Veröffentlichungstag der Anmeldung: 14.05.2008
(73) Patentinhaber: Siemens Enterprise Communications GmbH & Co. KG, 81379 München (DE)
(72) Erfinder: SCHAADE, Stephan, 86807 Buchloe (DE); LEDERER, Thomas, 82211 Herrsching (DE); LANKES, Holger, 82178 Puchheim (DE)
(74) Vertreter: Fritzsche, Thomas
(86) Internationale Anmeldenummer: PCT/EP2006/064566
(87) Internationale Veröffentlichungsnummer: WO 2007/025806

(56) Entgegenhaltungen:
- WO-A-02/39681
- DE-C1- 4 210 409
- US-A- 6 018 571
- US-A1- 2002 044 642

## Beschreibung

Heute übliche Tastentelefone in Kommunikationssystemen bieten überwiegend die Möglichkeit, Funktionstasten zu belegen oder zu programmieren. Beispielsweise kann eine Funktionstaste dergestalt belegt werden, dass durch Drücken der Funktionstaste eine Verbindung zu einer vorher für die Funktionstaste abgespeicherten Rufnummer aufgebaut wird.

Zur Programmierung einer Funktionstaste sind dabei häufig telefon- oder vermittlungsanlagen-spezifische Bedienschritte durchzuführen. Üblicherweise werden zur Programmierung einer Funktionstaste eine oder mehrere Tasten des Tastentelefons gleichzeitig und/oder in Abfolge gedrückt, wobei häufig die Programmierung anhand einer, auf einem Telefondisplay dargestellten Menüsteuerung erfolgt.

Je nach Anzahl an zur Verfügung stehenden, bereitgestellten Tastenfunktionen und je nach Komplexität der dargestellten Menüsteuerung, kann die Programmierung der Funktionstasten umständlich, fehleranfällig und/oder zeitaufwendig sein, insbesondere wenn neben der Auswahl der Tastenfunktion noch weitere Angaben durch den Benutzer eingegeben werden müssen - beispielsweise, bei der Belegung einer Taste als Zielwahltaste, eine Zielwahlrufnummer eines Teilnehmers und in einigen bekannten Systemen auch eine, auf dem Telefondisplay anzeigbare Zeichenkette, wie z.B. der Name des Teilnehmers.

US 6,018,571 A offenbart ein interaktives System mit einer Software-Anwendung und einem Telefon, die zusammenarbeiten, um eine Mehrzahl von benutzergesteuerten Leistungsmerkmalen zu implementieren. Das Telefon ist mit einem Computer verbunden, auf welchem eine Telefon-Anwendungssoftware ausgeführt wird. Das Telefon weist eine Mehrzahl von benutzerdefinierbaren Funktionstasten zur Implementierung von Leistungsmerkmalen des Telefons oder zur Aktivierung von Anwendungen auf dem Computer auf. Die Funktionstasten sind über die Telefon-Anwendungssoftware auf dem Computer programmierbar.

Es ist Aufgabe der Erfindung die Belegung einer Funktionstaste einer Endeinrichtung zu verbessern.

Gelöst wird diese Aufgabe durch ein Verfahren mit den Merkmalen des Patentanspruchs 1, durch ein Kommunikationssystem mit den Merkmalen des Patentanspruchs 11, sowie durch eine Kommunikationsendeinrichtung mit den Merkmalen des Patentanspruchs 12.

Vorteilhafte Ausführungsformen und Weiterbildungen der Erfindung sind in den abhängigen Ansprüchen angegeben.

Bei dem erfindungsgemäßen Verfahren zum Belegen einer Taste einer Kommunikationsendeinrichtung, wird infolge einer Benutzereingabe an der Kommunikationsendeinrichtung - insbesondere ein Drücken der Taste, ein Drücken von weiteren Tasten oder eine Auswahl eines Menüeintrages - eine Anwendung auf einer der Kommunikationsendeinrichtung zugeordneten Datenverarbeitungseinrichtung, insbesondere ein Arbeitsplatzrechner oder eine mobile Endeinrichtung wie ein PDA (PDA: Personal Digital Assistant), aktiviert. Durch die aktivierte Anwendung werden Tastenbelegungsinformationen für eine jeweilige Tastenbelegung zur Auswahl an einer Anzeige - z.B. ein Lichtschirm - angezeigt. Infolge eines - insbesondere manuellen - Auswählens einer der angezeigten Tastenbelegungsinformationen an der Datenverarbeitungseinrichtung wird die, der angezeigten Tastenbelegungsinformationen zugehörige Tastenbelegung der Taste an der Kommunikationsendeinrichtung zugewiesen. Im Rahmen der Aktivierung der Anwendung wird erfindungsgemäß eine die Taste identifizierende Tasteninformation, beispielsweise eine Tastennummer, übermittelt. Somit kann die Anwendung abhängig von der übermittelten Tasteninformation die für diese Taste zur Auswahl stehenden Tastenbelegungsinformationen ermitteln und lediglich die für die Taste gültigen Tastenbelegungsinformationen zur Auswahl anzeigen und ungültige Tastenbelegungsinformationen bei der Anzeige unterdrücken. Dies ist insbesondere vorteilhaft bei Kommunikationsendeinrichtungen, bei denen nicht jeder Taste jede mögliche Tastenbelegung zuweisbar ist und somit Fehlbedienungen verhindert werden können.

Bei der Kommunikationsendeinrichtung handelt es sich insbesondere um ein Endgerät, ein Telefon, sowie um eine auf einer Datenverarbeitungseinrichtung ablaufenden Telefonapplikation - ein so genannter Soft-Client - für Sprach-, Video- und/oder Multimedia-Kommunikation.

Bei der Tastenbelegung kann es sich vorzugsweise um eine Tastenfunktion zum Auslösen eines Leistungsmerkmals der Kommunikationsendeinrichtung und/oder eines Leistungsmerkmals einer, an die Kommunikationsendeinrichtung gekoppelten Kommunikationseinrichtung wie eine Vermittlungsanlage, ein so genannter Gatekeeper oder eine CTI-Applikation handeln. Das Leistungsmerkmal kann beispielsweise ein Rückruf-, Rufumleitungs-, Konferenz- und/oder Lautsprechen-Leistungsmerkmal, usw. sein. Die Tastenbelegungsinformationen können dabei Kennzahlen der Leistungsmerkmale oder textuelle Repräsentationen dieser Leistungsmerkmale sein, also beispielsweise "Rückruf", "Rufumleitung", "Konferenz" und/oder "Lautsprechen".

Nach Belegung der Taste kann zum Auslösen der der Taste zugewiesenen Tastenbelegung die Taste durch einen Benutzer - insbesondere durch Tastendruck - betätigt werden. Aufgrund der Betätigung der Taste wird daraufhin die zugewiesene Tastenbelegung oder das zugewiesene Leistungsmerkmal angezeigt bzw. ausgeführt.

Ein Vorteil des erfindungsgemäßen Verfahrens ist, dass die Anzahl der Auswahlschritte für eine Belegung der Taste erheblich reduziert wird und somit die Dauer für eine Belegung der Tasten Verkürzt wird. Weiterhin ist vorteilhaft, dass eine Datenverarbeitungseinrichtung üblicherweise ein deutlich größeres Display oder einen größeren Monitor als die Kommunikationsendeinrichtung aufweisen kann. Somit kann der Benutzer bei der Auswahl der Tastenbelegungsinformationen durch Hilfetexte zur Erläuterung einer ausgewählten Tastenbelegung und/oder von Fachbegriffen oder durch Demonstrationen anhand von Grafiken oder Videos zur Erläuterung des Verhaltens der Tastenbelegung nach der Betätigung unterstützt werden. Durch diese verbesserte Menüführung kann die Belegung einer Taste erleichtert und können Fehlbedienungen verringert werden.

Darüber hinaus kann in der Anwendung vorteilhafterweise eine Unterstützung durch einen so genannten Wizard oder Assistenten integriert werden. Durch dessen Schritt-für-Schritt-Bedienung kann die Auswahl der Tastenbelegungsinformationen strukturiert und somit die Belegung von Tasten soweit vereinfacht werden, dass auch unerfahrene Endanwender der Kommunikationsendeinrichtung die Belegung der Tasten selbst durchführen können.

In einer weiteren erfindungsgemäßen Ausführungsform der Erfindung kann im Rahmen der Anzeige der Tastenbelegungsinformationen ein Feld für eine Eingabe oder Auswahl - beispielsweise eine Auswahlliste - einer Adressinformation einer weiteren Kommunikationsendeinrichtung durch die Anwendung angezeigt werden. Beispielsweise kann als Tastenbelegung eine Zielwahl-Tastenfunktion ausgewählt und in dem Feld eine Ziel-Adressinformation der weiteren Kommunikationsendeinrichtung eingeben werden. Der Taste kann daraufhin die Zielwahl-Tastenfunktion und zusätzlich die Ziel-Adressinformation zugewiesen werden. Bei einem Betätigen der Taste zu einem späteren Zeitpunkt kann mittels der Ziel-Adressinformation eine Verbindung zur weiteren Kommunikationsendeinrichtung aufgebaut werden.

Somit kann insbesondere die Belegung von komplexen Tastenbelegungen, die eine Eingabe von Zusatzinformation erfordert, erleichtert werden. Weiterhin kann beispielsweise bei einer Auswahl von Rufnummern aus einer Menge von vorgegebenen oder vorgebbaren Rufnummern eine Abfrage einer Rufnummern- oder Mitarbeiter-Datenbank in die Anwendung integriert werden, um eine mit Rufnummern vorbelegte Auswahlliste zu ermitteln und für eine vereinfachte Auswahl anzuzeigen.

Dies kann insbesondere für eine Zuweisung eines komplexen Gruppen-Leistungsmerkmals gelten. Hierbei kann die Eingabe von mehreren, der Gruppe zuzuordnenden Adressinformationen von weiteren Kommunikationsendeinrichtungen, erforderlich sein, was über ein übliches Standard-Endgerät kompliziert durchzuführen wäre.

Bei einem Betätigen der Taste kann das Gruppen-Leistungsmerkmal ausgelöst werden. Im Rahmen des Auslösens des Gruppen-Leistungsmerkmals können gruppenspezifische Leistungsmerkmale für die zugeordneten, weiteren Kommunikationsendeinrichtungen, wie ein Einleiten einer Konferenzschaltung zu den weiteren Kommunikationsendeinrichtungen der Gruppe, zur weiteren Auswahl durch die Kommunikationsendeinrichtung angeboten werden. Diese Auswahl kann insbesondere an der Kommunikationsendeinrichtung oder an der Datenverarbeitungseinrichtung angezeigt werden, wobei ein Auswählen eines der gruppenspezifischen Leistungsmerkmale ein Ausführen dieses Leistungsmerkmals bewirkt.

Somit kann eine weitere, logische Auswahlschicht beim Auswählen von Leistungsmerkmalen eingeführt werden. Erst entscheidet sich der Benutzer implizit dadurch, aufgrund welche Taste er betätigt, für welche Gruppe er ein Leistungsmerkmal ausführen möchte und darauf folgend kann er das eigentlich auszuführende, gruppenspezifische Leistungsmerkmal auswählen.

Bei der weiteren Auswahl eines der gruppenspezifischen Leistungsmerkmale können die Adressinformationen der weiteren Kommunikationsendeinrichtungen der Gruppe erfasst werden und können bei einer Aktivierung des ausgewählten gruppenspezifischen Leistungsmerkmals einer Kommunikationseinrichtung ausgewertet werden. So kann beispielsweise eine Konferenzschaltung in einer Vermittlungsanlage zwischen den Kommunikationsendeinrichtungen der Gruppe ausgelöst werden.

Weiterhin kann im Rahmen der weiteren Auswahl eine weitere Anwendung der Datenverarbeitungseinrichtung oder eines CTI-Servers (CTI: Computer Telephony Integration) aktiviert und dieser weiteren Anwendung die Adressinformationen der Gruppe übermittelt werden. Beispielsweise können somit nichtkommunikationsendeinrichungsspezifische Funktionen aktiviert werden, wie eine Videokonferenz mittels der Datenverarbeitungseinrichtung aufbauen, eine Darstellung von Präsenzinformationen von Teilnehmern der Gruppe oder eine Email an Teilnehmer der Gruppe schicken.

Vorteilhafterweise können damit Leistungsmerkmale einer Kommunikationsendeinrichtung erweitert werden, indem durch den Tastendruck Funktionen einer Datenverarbeitungseinrichtung oder eines Servers ausgeführt werden können.

Ein Ausführungsbeispiel der Erfindung wird nachfolgend anhand der Zeichnung näher erklärt.

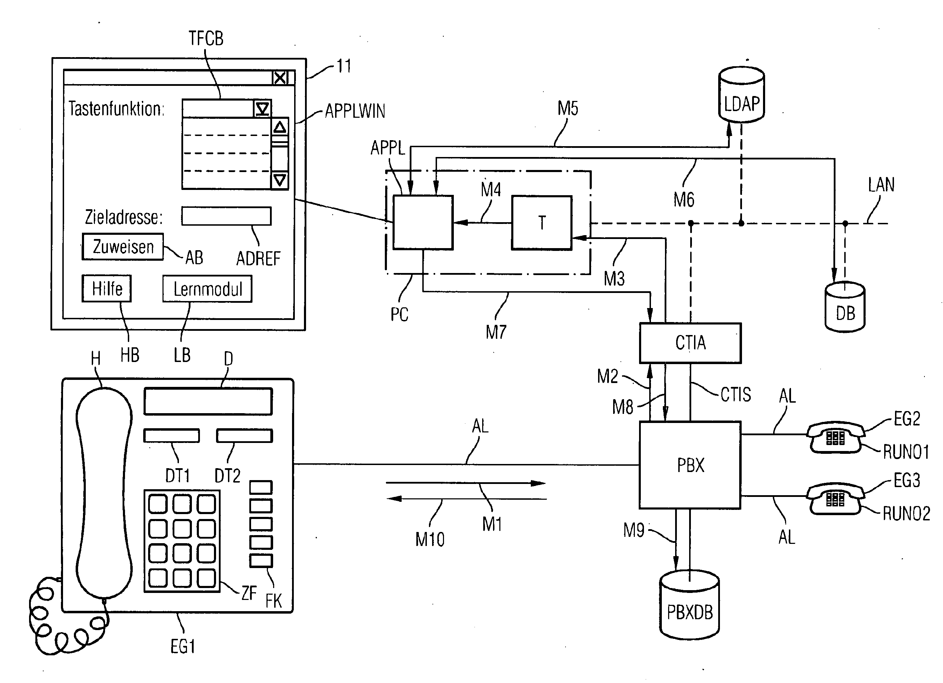

Dabei zeigt in schematischer Darstellung die
- Figur 1: ein Kommunikationssystem mit drei Kommunikationsendeinrichtungen zur Durchführung des erfindungsgemäßen Verfahrens.

Die Figur 1 zeigt in schematischer Darstellung ein Kommunikationssystem zur Echtzeitkommunikation mit einer als Rechteck dargestellten Vermittlungsanlage PBX und einem, über eine Anschlussleitung AL an die Vermittlungsanlage PBX angekoppelten, ersten Telefon EG1 als Kommunikationsendeinrichtung. Weiterhin sind an die Vermittlungsanlage PBX über weitere Anschlussleitungen AL ein zweites Telefon EG2 und ein drittes Telefon EG3 als weitere Kommunikationsendeinrichtungen angeschlossen. Dem zweiten Telefon EG2 ist eine erste Rufnummer RUNO1 und dem dritten Telefon EG3 ist eine zweite Rufnummer RUNO2 als Adresse zugeordnet. Weiterhin ist an die Vermittlungsanlage PBX eine Vermittlungsanlagen-Datenbank PBXDB gekoppelt, die teilnehmer-, endgeräte-, verbindungsbezogene Daten speichert.

An die Vermittlungsanlage PBX ist weiterhin eine CTI-Applikation CTIA (CTI: Computer Telephony Integration) gekoppelt und an diese wiederum ein Teilnehmer-Directory-Service LDAP zur Speicherung von Teilnehmer-Daten und eine Datenbank DB zur Speicherung diverser Daten für eine Anwendung eines PCs oder für die CTI-Applikation CTIA. Die CTI-Applikation CTIA, der Teilnehmer-Directory-Service LDAP und die Datenbank DB sind dabei über ein, durch eine gestrichelte Linie angedeutetes, lokales Netzwerk LAN miteinander vernetzt.

An das lokale Netzwerk LAN, insbesondere ein paket-basiertes Datennetzwerk, ist weiterhin ein als Rechteck dargestellter Arbeitsplatzrechner PC als Datenverarbeitungseinrichtung angeschlossen, wobei das erste Telefon EG1 und der Arbeitsplatzrechner PC Kommunikationsendgeräte eines einzigen Teilnehmers darstellen. Weiterhin ist ein Monitor M des Arbeitsplatzrechners PC als ein Rechteck veranschaulicht, innerhalb dessen Ausgaben einer Anwendung APPL - als Rechteck innerhalb des Arbeitsplatzrechners PC dargestellt - durch ein Anwendungsfenster APPLWIN veranschaulicht ist. Das Anwendungsfenster APPLWIN ist dabei als Rechteck innerhalb des Monitors M dargestellt.

Die Kopplung zwischen der CTI-Applikation CTIA und der Vermittlungsanlage PBX erfolgt über eine, als durchgehende Linie zwischen diesen beiden Komponenten dargestellte CTI-Schnittstelle CTIS.

In Figur 1 ist das erste Telefon EG1 als Tastentelefon, mit einer, als Rechteck dargestellten Funktionstaste FK, einem Wahlziffernfeld ZF, einem Display D und zwei Menütasten DT1, DT2 eines möglicherweise vorhandenen displaybezogenen Menüs dargestellt. Weiterhin ist für das erste Telefon EG1 ein Telefonhörer H dargestellt.

Die auf dem ersten Arbeitsplatzrechner PC ablaufende Anwendung APPL und eine, ebenfalls auf dem Arbeitsplatzrechner PC ablaufende Proxy-Anwendung T sind als Rechtecke innerhalb des Arbeitsplatzrechners PC veranschaulicht. Bildschirmausgaben der Anwendung APPL sind im Anwendungsfenster APPLWIN dargestellt, wobei im Ausführungbeispiel folgende Fensterkomponenten einer grafischen Benutzeroberfläche - so genannte Widgets
- dargestellt sind:
   - Eine mit dem Text "Tastenfunktion" beschriftete Tastenfunktions-Combobox TFCB zur Eingabe einer Tastenbelegungsinformation oder zur Auswahl einer Tastenbelegungsinformation aus einer vorgegebenen Liste,
   - ein mit dem Text "Zieladresse" beschriftetes Adresseingabefeld ADREF zur optionalen Eingabe einer Zieladresse für einige der Tastenbelegungsinformationen,
   - ein mit dem Text "Zuweisen" beschrifteter Auslöse-Schaltknopf AB zum Starten von Aktionen durch den Benutzer,
   - ein mit dem Text "Hilfe" beschrifteter Hilfe-Schaltknopf HB zum Öffnen und Darstellen einer kontextbezogenen Hilfe-Funktionalität für die ausgewählte Tastenbelegungsinformation auf dem Monitor M, und
   - ein mit dem Text "Lernmodul" beschrifteter Lernmodul-Schaltknopf LB zum Öffnen und Ausführen eines kontextbezogenen Lernmoduls für die ausgewählte Tastenbelegungsinformation auf dem Monitor M.

Die Proxy-Anwendung T ist beispielsweise eine permanent auf dem Arbeitsplatzrechner PC laufende Applikation, die beispielsweise über einen so genannten Socket des Rechners Meldungen von der CTI-Applikation CTIA empfangen und auf diese reagieren kann, Informationen von dieser zur Anwendung APPL übermitteln kann und ein Öffnen der Anwendung APPL initiieren kann.

In einer alternativen Ausgestaltung können diese Funktionen der Proxy-Anwendung T in die Anwendung APPL integriert werden.

Die Vermittlungsanlage PBX und die Telefone EG1, EG2, EG3 sind zur Echtzeitkommunikation vorgesehen. Alternativ zu den dargestellten Festnetztelefonen kann darüber hinaus eine auf einem Arbeitsplatzrechner ablaufende Telefonapplikation - ein so genannter Soft-Client - oder mobile Endeinrichtungen vorgesehen sein bzw. werden. Die Vermittlungsanlage PBX kann auf leitungsvermittelten oder paketorientierten Prinzipien basieren, wobei anstelle einer Vermittlungsanlage PBX auch ein Gatekeeper, ein Gateway oder ein Server auf entsprechende Weise integriert werden kann.

Im Folgenden werden Meldungen oder Verbindungen zwischen den vorstehend genannten Komponenten als M1 bis M10 bezeichnet und sind durch Linien mit einfachem Pfeil oder Doppelpfeil dargestellt.

In Figur 1 ist das erste Telefon EG1 im Ruhezustand. Der Teilnehmer als Benutzer des ersten Telefons EG1 hat den Wunsch, die Funktionstaste FK mit einer Funktion zu belegen. Dies ist beispielsweise die Belegung der Funktionstaste FK mit der Rufnummer RUNO1 als Zielwahl um somit später durch einen Tastendruck eine Verbindung zum zweiten Telefon EG2, adressiert mittels der Rufnummer RUNO1, aufzubauen.

Zur Programmierung der Funktionstaste FK drückt der Teilnehmer nun auf endgeräte-spezifische Weise die Funktionstaste FK - z.B. durch mehrsekündiges Drücken oder durch vorherige Auswahl eines Endgeräte-Menüs mittels der Menütasten DT1, DT2 - und führt somit eine Benutzereingabe am ersten Telefon EG1 durch.

Infolge dieser Benutzereingabe des Teilnehmers wird eine Tastendruckmeldung M1 vom ersten Telefon EG1 zur Vermittlungsanlage PBX übermittelt. Daraufhin wird ein Tastenprogrammierungs-Leistungsmerkmal in der Vermittlungsanlage PBX aktiviert, in dessen Rahmen die CTI-Meldung M2 von der Vermittlungsanlage PBX zur CTI-Applikation CTIA über die CTI-Schnittstelle CTIS übermittelt wird. Die CTI-Meldung M2 umfasst vorzugsweise eine vermittlungsanlageninterne Tastennummer der Funktionstaste FK, eine aktuelle Belegung der Funktionstaste FK und eventuell weitere vermittlungsanlagen- und/oder verbindungsspezifische Daten. Die Kopplung über die CTI-Schnittstelle CTIS erfolge dabei insbesondere mittels des von der ECMA (European Computer Manufacturers Association) standardisierten CSTA-Protokolls (CSTA: Computer Supported Telecommunications Application), über das die CTI-Applikation CTIA über Zustände und Zustandswechsel der Vermittlungsanlage PBX informiert wird.

Die CTI-Applikation CTIA kann dabei auf einem eigenen Rechner, in der Vermittlungsanlage PBX oder auf dem Arbeitsplatzrechner PC ablaufen.

Die CTI-Applikation CTIA erfasst die in der CTI-Meldung M2 übermittelten Daten. In einem darauf folgenden - nicht dargestellten - Verfahrensschritt kann die CTI-Applikation CTIA den dem ersten Telefon EG1 zugeordneten Arbeitsplatzrechner PC ermitteln. Beispielsweise kann der zugeordnete Arbeitsplatzrechner PC durch Abfrage eines, der Rufnummer des ersten Telefons EG1 zugeordneten Datensatzes des Teilnehmer-Directory-Services LDAP ermittelt werden. Durch Abfrage der - eventuell in ein kanonisches oder vollqualifiziertes Format gewandelten - Rufnummer werden zu der Rufnummer des ersten Telefons EG1 zugehörige Daten ausgelesen und an die CTI-Applikation CTIA zurückgeliefert. Eines der zurückgelieferten Daten ist beispielsweise eine IP-Adresse des Arbeitsplatzrechners PC.

An die Proxy-Anwendung T des somit ermittelten Arbeitsplatzrechners PC schickt daraufhin die CTI-Applikation CTIA eine Aufrufmeldung M3, vorzugsweise zusammen mit der Tastennummer der Funktionstaste FK. Die Proxy-Anwendung T ist dabei ein permanent laufender Prozess oder wird durch die CTI-Applikation CTIA gestartet oder aufgeweckt.

Die Adressierung der Proxy-Anwendung T erfolgt beispielsweise über die ermittelte Rechner-IP-Adresse für den Arbeitsplatzrechner PC des ersten Teilnehmers und einer vorgegebenen Port-Nummer. Das Aktivieren der Proxy-Anwendung T erfolgt beispielsweise über einen so genannten "Remote Procedure Call" RPC.

Die auf dem Arbeitsplatzrechner PC ablaufende Proxy-Anwendung T empfängt die Aufrufmeldung M3 und übermittelt der Anwendung APPL auf demselben Arbeitsplatzrechner PC die in der Meldung enthaltenen Daten, also insbesondere auch die Tastennummer der gedrückten Funktionstaste FK. Diese Übermittlung kann beispielsweise durch einen Programmaufruf der Anwendung APPL, durch Interprozesskommunikation oder durch Meldungsaustausch erfolgen. In Figur 1 ist dies durch die Meldung M4 von der Proxy-Anwendung T zur Anwendung APPL angedeutet.

Alternativ zu dieser Ausgestaltung könnte die CTI-Applikation CTIA die Anwendung APPL direkt aufrufen. Auf die Proxy-Anwendung T könnte somit verzichtet werden. In einer weiteren alternativen Ausgestaltung kann das erste Telefon EG1 direkt mit dem Arbeitsplatzrechner PC und der Anwendung APPL kommunizieren. Allgemein betrachtet muss lediglich eine beliebige Form von Zuordnung zwischen dem ersten Telefon EG1 und dem Arbeitsplatzrechner PC bestehen.

Die Anwendung APPL wird in einem weiteren Verfahrensschritt, falls sie noch nicht aktiv ist, gestartet und aktiviert. Es wird das Anwendungsfenster APPLWIN geöffnet und auf dem Monitor M angezeigt.

Falls die Anwendung APPL weitere teilnehmerbezogene Daten benötigt, kann sie über die Meldung M5 Teilnehmerdaten vom Teilnehmer-Directory-Service LDAP abfragen. Weiterhin können weitere Ressourcen von der Datenbank DB mittels der Meldung M6 abgefragt werden. Dies kann beispielsweise eine Liste aller unterstützten Tastenfunktionen oder eine kontextabhängiger Hilfetext sein.

Im Anwendungsfenster APPLWIN der aktivierten Anwendung APPL werden daraufhin die für die Funktionstaste FK erlaubten Tastenfunktionen in der Tastenfunktions-Combobox TFCB in einer textuellen Darstellung - im Folgenden als Tastenfunktionstexte bezeichnet - eingetragen und dem Teilnehmer als Tastenbelegungsinformationen zur Auswahl angezeigt. Beispielsweise enthält die Combobox folgende Einträge als Tastenbelegungsinformationen: "Zielwahl zu Teilnehmer", "Verbindung trennen", "Anrufbeantworter abfragen", "Rückruf einleiten", "Konferenz einleiten", "Ruf parken" usw.

Daraufhin erhält der Teilnehmer die Kontrolle über das Anwendungsfenster APPLWIN. Er kann eine der Tastenfunktionstexte manuell auswählen und die Auswahl durch Betätigen des Auslöse-Schaltknopfes AB, eines Menüpunktes oder eines Tastenkombination auf der Tastatur des Arbeitsplatzrechners PC abschließend quittieren.

Die Anwendung APPL kann nun erste Gültigkeitsprüfungen der Auswahl durchführen. Diese können auf internen Regeln basieren oder durch Rückfrage bei der Datenbank DB, bei der CTI-Applikation CTIA und/oder bei der Vermittlungsanlage PBX erfolgen.

Im Folgenden werden Teilnehmer-Fehleingaben Fehleingaben im Anwendungsfenster APPLWIN und Gültigkeitsprüfungen zur Vermeidung von derartigen nicht weiter berücksichtigt.

Die Anwendung APPL meldet infolge des Auswählens einer der angezeigten Tastenbelegungsinformationen, beispielsweise "Anrufbeantworter abfragen" mittels der Meldung M7 der CTI-Applikation CTIA die Auswahl und die CTI-Applikation CTIA wiederum die Auswahl der Vermittlungsanlage PBX (mittels Meldung M8).

Gemäß dem Ausführungbeispiel speichert die Vermittlungsanlage PBX daraufhin in der Vermittlungsanlagen-Datenbank eine der Tastenbelegungsinformation zugeordnete Kennzahl in einen Datensatz für die Funktionstaste FK - Meldung M9. Weiterhin wird das erste Telefon EG1 mittels der Meldung M10 informiert, dass die Funktionstaste FK als neue Funktion die Funktion "Anrufbeantworter abfragen" erhalten soll. Das ersten Telefon EG1 oder die Vermittlungsanlage PBX weist daraufhin die Funktion "Anrufbeantworter abfragen" der Funktionstaste FK zu und geht in einen Ruhezustand über.

Somit ist die Programmierung oder Konfiguration der Funktionstaste FK abgeschlossen und ein Drücken der Funktionstaste FK löst das Leistungsmerkmal "Anrufbeantworter abfragen" des ersten Telefons EG1 oder der Vermittlungsanlage PBX aus.

Dabei verwaltet die Vermittlungsanlage PBX und/oder das erste Telefon EG1 vorzugsweise Funktionstasten und die, diesen zugeordneten Tastenbelegungen mittels eindeutiger Codes als identifizierende Tasteninformationen bzw. Tastenbelegungsinformationen.

Bei Abstraktion der vorgenannten Schritte, wird somit infolge eines Auswählens einer der angezeigten Tastenbelegungsinformationen durch den Teilnehmer über die Anwendung APPL der Funktionstaste FK des ersten Telefons EG1 die der Tastenbelegungsinformation zugehörige Tastenbelegung zugewiesen.

Im Folgenden werden Variationen und Erweiterungen dieses Verfahrens beschrieben.

Endeinrichtungen mit mehreren Tasten können häufig Beschränkungen bzgl. der Belegung ihrer Tasten vorgegeben sein. Beispielsweise kann vorgegeben sein, dass bestimmte Tasten nur mit bestimmten Funktionen belegt werden dürfen. Hier kann z.B. zwischen Tasten, die eine Funktion ohne zusätzliche Information repräsentieren und Tasten, die zusätzlich Rufnummern speichern können, unterschieden werden. In so einem Fall ermittelt die Anwendung APPL vorzugsweise zuerst, um welche Taste es sich bei der zu belegenden Funktionstaste FK handelt, ermittelt daraufhin, welche Tastenbelegungen für diese Taste erlaubt sind und zeigt daraufhin nur die Tastenbelegungsinformationen für die erlaubten Tastenfunktionen in der Tastenfunktions-Combobox TFCB an.

Des Weiteren kann eine Tastenfunktion, wie beispielsweise Zielwahl, die Eingabe einer weiteren Information erfordern. Beispielsweise kann die Anwendung APPL bei Auswahl der Tasteninformation "Zielwahl" eine Eingabe im Adresseingabefeld ADREF ermöglichen. Hier kann der Teilnehmer eine Zielrufnummer als Adressinformation eingeben, beispielsweise die Rufnummer RUNO1 des zweiten Telefons EG2. Vorzugsweise kann die Auswahl der Rufnummer durch die Anwendung APPL unterstützt werden, indem Teilnehmer-Daten wie Namen und Rufnummern mit Hilfe der Meldung M5 vom Teilnehmer-Directory-Service LDAP ermittelt werden und der Benutzer nur den Namen eines Zielwahl-Teilnehmers - optional auch teilqualifiziert - einzugeben braucht, um die Rufnummer des Zielwahl-Teilnehmers zu ermitteln.

Nach Auslösen des Auslöse-Schaltknopfs AB wird nun die Rufnummer in den Meldungen M7 und M8 zur Vermittlungsanlage PBX übermittelt. Daraufhin kann die Tastenfunktion "Zielwahl" und die eingegebene Rufnummer der Funktionstaste FK zugewiesen werden, wodurch die Funktionstaste FK zu einer Zielwahltaste wird. Vorzugsweise wird neben einer entsprechenden Änderung einer Tasten-Konfiguration im ersten Telefon EG1 oder der Vermittlungsanlage PBX die Änderung der Tastenfunktion der Funktionstaste FK dem Benutzer über das Display D oder optische oder akustische Signale als Bestätigung mitgeteilt.

Damit ist der Belegungsvorgang der Funktionstaste FK abgeschlossen.

Repräsentiert die Zielwahlrufnummer beispielsweise die Rufnummer RUNO1 des zweiten Telefons EG2, kann durch ein Drücken der Funktionstaste FK ein Verbindungsaufbau zum zweiten Telefon EG2 durch Adressierung zur Rufnummer RUNO1 eingeleitet werden.

Der erwähnte Teilnehmer-Directory-Service LDAP basiert dabei vorzugsweise auf einer Datenbank mit Verzeichnisstruktur, wobei ein Zugriff über das LDAP-Protokoll erfolgt. Vorzugsweise ist die Datenbank Teil eines so genannten User-Management-Systems, der alle Mitarbeiter einer Firma - z.B. der Teilnehmer - und auch externe Kontaktpersonen zentral im Firmennetz verwaltet und über das LDAP-Protokoll einen standardisierten Zugriff auf die Daten anbietet.

Beispielhaft besteht ein Datensatz im Teilnehmer-Directory-Services LDAP aus Werten für Name, Vorname, Rufnummer, alternative Rufnummer, Mitarbeiternummer, E-Mail, Arbeitsplatzrechner-Identifikation, usw. von Teilnehmern. Teilnehmer sind beispielsweise Mitarbeiter einer Firma oder einer Organisation. Vorzugsweise besteht im Teilnehmer-Directory-Services LDAP für jeden Teilnehmer bzw. Mitarbeiter ein derartiger Datensatz, wobei Einträge in der Datenbank vorzugsweise durch die Rufnummer als Abfragekriterium eindeutig ermittelbar sind.

In einer erfindungsgemäßen Erweiterung, kann die Funktionstaste FK - ansprechbar durch eine Verwendung einer Umschalttaste am ersten Telefon EG1 - auf zwei oder mehreren Ebenen belegt werden. Hierbei kann insbesondere ein Belegen der zweiten Ebene gemeinsam mit der Belegung der ersten Ebene erfolgen. Dazu kann die Anwendung APPL beispielsweise Bedienelemente zur Eingabe von mehreren Tastenbelegungsinformation für die mehreren Tastenebenen vorsehen.

Weiterhin kann das Verfahren so umgesetzt werden, dass eine Mehrfachbelegung der Funktionstaste für verschiedene Betriebszustände des ersten Telefon EG1 ermöglicht wird. Die Anwendung APPL kann dazu ein betriebszustandabhängiges Setzen der Tastenbelegung anbieten, bei dem die Funktionstaste FK beispielsweise für den Ruhezustand des ersten Telefone EG1 mit der Funktion "Anrufbeantworter abhören" und im Gesprächszustand mit "Verbindung trennen" belegt ist. Somit kann selbst bei geringer Anzahl von Tasten den Funktionstasten eine große Anzahl an Tastenbelegungen zugewiesen werden. Auf diese Weise wird dem Teilnehmer stets eine optimale, an die Verbindungssituation angepasste Belegung der Tasten angeboten.

Mit den vorstehend aufgeführten Verfahrensschritten wird die Programmierung einer Funktionstaste vereinfacht und weniger fehleranfällig, da weniger Auswahlschritte als üblicherweise durchgeführt werden. Weiterhin ergeben sich auch eine Zeiteinsparung und eine Effizienzsteigerung bei der Zuweisung von Tastenbelegungen.

Weiterhin können in der Anwendung APPL Anwendungsmodule integriert werden, die eine Belegung der Tasten unterstützen. Beispielsweise kann der Hilfe-Schaltknopf HB dazu verwendet werden, für eine über die Tastenbelegungs-Combobox vorselektierte Tastenbelegungsinformation einen für diesen Kontext - beispielsweise für die in der Tastenfunktions-Combobox TFCB vorselektierte Tastenbelegungsinformation - - abhängigen Hilfetext auszugeben. Der anzuzeigende Hilfetext kann dabei über die Meldung M6 aus der Datenbank DB gelesen werden. Somit können auch einem unerfahrenen Benutzer die teilweise komplexen Funktionen einer Kommunikationsendeinrichtung erläutert werden.

Analog zum Hilfe-Schaltknopf HB kann in der Anwendung APPL der Lernmodul-Schaltknopf LB integriert und dazu verwendet werden, für eine über die Tastenbelegungs-Combobox TFCB vorselektierte Tastenbelegungsinformation ein für diesen Kontext abhängiges interaktives Video-Lernmodul auszugeben. Das anzuzeigende Lernmodul kann dabei über die Meldung M6 aus der Datenbank DB gelesen werden. Erneut kann somit auch einem unerfahrenen Benutzer die teilweise komplexen Funktionen einer Kommunikationsendeinrichtung eingehend erläutert werden.

Als Erweiterung des vorstehend erläuterten Verfahrens, kann auch eine komplexe Gruppen-Tastenfunktion der Funktionstaste FK zugewiesen werden. Diese Gruppen-Tastenfunktion soll dabei für eine definierte Gruppe von Kommunikationsendeinrichtungen bei Tastendruck der Funktionstaste FK die Möglichkeit bieten, komplexere Gruppen-Leistungsmerkmale, bereitgestellt durch die Vermittlungsanlage PBX, die CTI-Applikation CTIA oder einer weiteren Anwendung auf dem Arbeitsplatzrechner PC auszulösen. Derartige Gruppen-Leistungsmerkmale sind beispielsweise eine Telefonkonferenz oder eine Videokonferenz mit den konfigurierten Gruppenmitgliedern, ein Aufruf einer Mailfunktion am Arbeitsplatzrechner PC, eine E-Mail an die Gruppenmitglieder, eine Änderung der Zusammensetzung der Gruppe, eine Darstellung von Präsenzinformation der Teilnehmer der Gruppe auf dem Arbeitsplatzrechner PC, ein Kommunikationsaufbau zu einem Teilnehmer der Gruppe oder ein Kommunikationsaufbau zu eine alternativen Rufnummer eines Teilnehmers der Gruppe.

Zur Durchführung des jeweiligen, genannten Leistungsmerkmals werden dabei beispielsweise die Rufnummer, der Name und/oder die E-Mail eines Teilnehmers benötigt.

Bei der Zuweisung der Gruppen-Tastenfunktion wird wie vorstehend beschrieben, eine Benutzereingabe an der Funktionstaste FK durchgeführt und über die Kette von Meldungen M1, M2, M3, M4 die Anwendung APPL aktiviert. Die Anwendung APPL besitzt weiterhin zusätzlich Felder zur Auswahl und/oder Anzeige von teilnehmerbezogenen Daten wie Name, E-Mail, usw. - nicht dargestellt. Wird als Tastenfunktion die "Gruppen-Tastenfunktion" ausgewählt, kann nun der Teilnehmer mehrere andere Teilnehmer anhand des Namens oder der Rufnummer auswählen und diese der Gruppe zuordnen. Die Anwendung APPL kann durch Zugriff über die Meldung M5 auf den Teilnehmer-Directory-Service LDAP die Daten der Teilnehmer ermitteln und anzeigen.

Nach Auswahl von mehreren Rufnummern zum Aufnehmen der Rufnummern bzw. der zugehörigen Teilnehmer in eine Gruppe, kann durch Aktivieren des Auslöse-Schaltknopfs AB in der Meldung M7 die ausgewählte Tastenbelegungsinformation, also die Gruppen-Tastenfunktion und eine Liste der Rufnummern für die Gruppe an die CTI-Applikation CTIA übermittelt werden. Diese kann die Liste der Rufnummern beispielsweise in der Datenbank DB der Funktionstaste FK zugeordnet abspeichern oder der Vermittlungsanlage PBX übermitteln, damit diese die Rufnummern der Funktionstaste FK zugeordnet abspeichert. Der Funktionstaste FK wird daraufhin lediglich die Funktion "Gruppen-Tastenfunktion" zugewiesen.

Bei Auswahl der Gruppen-Tastenfunktion durch Drücken der mit dieser Funktion belegten Funktionstaste FK wird durch das erste Telefon EG1, eventuell gesteuert durch die Vermittlungsanlage PBX oder die CTI-Applikation CTIA, ein Auswahlmenü im Display D angeboten, in dem eines von mehreren Gruppen-Leistungsmerkmalen ausgewählt werden kann. Wählt nun der Teilnehmer über die Menütasten DT1, DT2 beispielsweise ein Gruppen-Telefon-Leistungsmerkmal wie eine Konferenzschaltung zu den Rufnummern der Gruppenmitglieder, wird der Vermittlungsanlage PBX die Auswahl des Telefon-Leistungsmerkmals mitgeteilt. Außerdem ist der Vermittlungsanlage PBX bekannt oder es ist durch sie ermittelbar, um welche Gruppe es sich handelt. Die Vermittlungsanlage PBX ermittelt daraufhin die Rufnummern der Mitglieder der Gruppe und aktiviert das Telefon-Leistungsmerkmal - die Konferenzschaltung - für diese Rufnummern.

Wählt nun der Teilnehmer über die Menütasten DT1, DT2 beispielsweise ein Gruppen-Leistungsmerkmal, dass nicht durch die Vermittlungsanlage PBX bereitgestellt wird, wie beispielsweise das Generieren einer E-Mail an alle Gruppenmitglieder, ergibt sich ein modifizierter Ablauf. Zuerst wird erneut der Vermittlungsanlage PBX die Auswahl des Leistungsmerkmals mitgeteilt. Die CTI-Applikation CTIA wird über die Auswahl des Leistungsmerkmals informiert und daraufhin von dieser eine weitere Anwendung (nicht dargestellt) des Arbeitsplatzrechners PC. Die CTI-Applikation CTIA oder die weitere Anwendung ermitteln die Rufnummern der Gruppenmitglieder, beispielsweise durch Auslesen der Datenbank DB oder der Vermittlungsanlagen-Datenbank PBXDB und ermitteln durch Abfrage des Teilnehmer-Directory-Services LDAP die der jeweiligen Rufnummer zugeordneten teilnehmerbezogenen Daten wie beispielsweise die E-Mail-Adresse.

Zur Abfrage der Rufnummern im Teilnehmer-Directory-Services LDAP kann es dabei vorteilhaft sein, die Rufnummern der Gruppenmitglieder so zu normieren, dass eine Abfrage nach der Rufnummer eindeutig einen Teilnehmer-Datensatz zurückliefert.

Die dermaßen ermittelten E-Mail-Adressen und weitere Teilnehmerbezogene Daten können daraufhin in der weiteren Anwendung zum Generieren einer E-Mail an einen Verteiler, der die ermittelten E-Mail-Adressen umfasst, verwendet werden.

Bei der vorstehend ausgeführten Belegung von Gruppen-Tastenfunktionen ist es somit vorteilhaft, dass Leistungsmerkmale der Vermittlungsanlage PBX und Leistungsmerkmale einer vermittlungsanlagenexternen Anwendung aufgerufen werden können. Weiterhin ist vorteilhaft, dass zentrale Teilnehmer-Daten bei Aktivierung eines Gruppen-Leistungsmerkmals ausgewertet und aus dem Teilnehmer-Directory-Services LDAP ausgelesen werden können, und somit die Teilnehmer-Daten durchgängig aktuell sind und zwischenzeitliche Änderungen an den Teilnehmer-Daten automatisch übernommen werden, da keine doppelte Datenhaltung erfolgt und diese Daten bei jeder Gruppen-Leistungsmerkmal-Aktivierung erneut ermittelt werden. Darüber hinaus ist vorteilhaft, dass komplexe Funktionen umsetzbar sind, die trotzdem schnell und ohne spezielle Bedienerkenntnisse über eine Anwendung auf einem Rechner ausgewählt und/oder ausgeführt werden können. Weiterhin ist vorteilhaft, als dass eine Beschleunigung von häufig wiederkehrenden Arbeitsabläufen und eine deutliche Produktivitätssteigerung des Teilnehmers erreicht werden kann.

Während die Erfindung im Ausführungsbeispiel anhand von Sprachendgeräten erläutert wurde, kann es sich bei der Kommunikationsendeinrichtungen auch um eine Video- oder Multimediaendeinrichtungen oder um Datenendeinrichtungen wie Faxgeräte handeln. Weiterhin kann es sich bei den Telefonen EG1, EG2, EG3 um Software-Telefonanwendungen der Vermittlungsanlage PBX oder vermittlungsanlagen-externe Endeinrichtungen handeln. Weiterhin kann als Kommunikationsverfahren ein leitungsvermitteltes oder ein paketorientiertes Verfahren eingesetzt werden und können die Telefone EG1, EG2, EG3 leitungsvermittelte Endgeräte oder paketorientierte Endgeräte sein.

## Patentansprüche

1. Verfahren zum Belegen einer Taste (FK) einer Kommunikationsendeinrichtung (EG1), bei dem
eine Anwendung (APPL) auf einer der Kommunikationsendeinrichtung (EG1) zugeordneten Datenverarbeitungseinrichtung (PC) aktiviert wird,
durch die aktivierte Anwendung (APPL) Tastenbelegungsinformationen für eine jeweilige Tastenbelegung zur Auswahl angezeigt werden, und
infolge eines Auswählens einer der angezeigten Tastenbelegungsinformationen an der Datenverarbeitungseinrichtung (PC) der Taste (FK) an der Kommunikationsendeinrichtung (EG1) die zugehörige Tastenbelegung zugewiesen wird.
**dadurch gekennzeichnet,**
**dass** die Anwendung (APPL) infolge einer Benutzereingabe an der Kommunikationsendeinrichtung (EG1) aktiviert wird, und dass im Rahmen der Aktivierung der Anwendung (APPL) eine, die Taste (FK) identifizierende Tasteninformation an die Datenverarbeitungseinrichtung übermittelt wird.

2. Verfahren nach Anspruch 1,
**dadurch gekennzeichnet,**
**dass** die Tastenbelegung eine Tastenfunktion zum Auslösen eines Leistungsmerkmals der Kommunikationsendeinrichtung (EG1) und/oder einer an die Kommunikationsendeinrichtung gekoppelten Kommunikationseinrichtung (PBX, CTIA) darstellt.

3. Verfahren nach Anspruch 1 oder 2,
**dadurch gekennzeichnet,**
**dass** abhängig von der übermittelten Tasteninformation die für diese Taste (FK) zur Auswahl stehenden Tastenbelegungsinformationen ermittelt werden.

4. Verfahren nach einem der vorhergehenden Ansprüche,
**dadurch gekennzeichnet,**
**dass** im Rahmen der Anzeige der Tastenbelegungsinformationen ein Feld (ADREF) für eine Eingabe oder Auswahl einer Adressinformation (RUNO1, RUNO2) einer weiteren Kommunikationsendeinrichtung (EG2, EG3) durch die Anwendung (APPL) angezeigt wird,
und infolge des Auswählens der entsprechenden Tastenbelegungsinformation zusätzlich der Taste (FK) die Adressinformation zugewiesen wird.

5. Verfahren nach einem der vorhergehenden Ansprüche,
**dadurch gekennzeichnet,**
**dass** die Tastenbelegung als eine Zielwahl-Tastenfunktion zum Auslösen einer Verbindung zu einer weiteren Kommunikationsendeinrichtung (EG2, EG3) ausgestaltet ist,
der Taste (FK) zusätzlich eine Adressinformation (RUNO1, RUN02) der weiteren Kommunikationsendeinrichtung (EG2, EG3) zugewiesen wird, und
bei einem Betätigen der Taste (FK) mittels der Adressinformation (RUNO1, RUN02) eine Verbindung zu der weiteren Kommunikationsendeinrichtung (EG2, EG3) aufgebaut wird.

6. Verfahren nach einem der vorhergehenden Ansprüche,
**dadurch gekennzeichnet,**
**dass** die Tastenbelegung als eine Gruppen-Tastenfunktion zum Auslösen eines Gruppen-Leistungsmerkmals für mehrere, zu einer Gruppe zusammengefasste, weitere Kommunikationsendeinrichtungen (EG2, EG3) ausgestaltet ist, wobei im Rahmen der Auswahl der entsprechenden Tastenbelegungsinformation Adressinformationen (RUNO1, RUN02) der weiteren Kommunikationsendeinrichtungen (EG2, EG3) eingebbar oder auswählbar sind.

7. Verfahren nach Anspruch 6,
**dadurch gekennzeichnet,**
**dass** durch ein Betätigen der Taste (FK) das Gruppen-Leistungsmerkmal ausgelöst wird und im Rahmen des Gruppen-Leistungsmerkmals eine Auswahl von gruppenspezifischen Leistungsmerkmalen für die weiteren Kommunikationsendeinrichtungen (EG2, EG3) durch die Kommunikationsendeinrichtung (EG1) zur weiteren Auswahl angeboten wird.

8. Verfahren nach Anspruch 7,
**dadurch gekennzeichnet,**
**dass** infolge der weiteren Auswahl eines der gruppenspezifischen Leistungsmerkmale die Adressinformationen (RUNO1, RUN02) der weiteren Kommunikationsendeinrichtungen (EG2, EG3) erfasst werden.

9. Verfahren nach einem der Ansprüche 7 oder 8,
**dadurch gekennzeichnet,**
**dass** infolge des Auslösens des Gruppen-Leistungsmerkmals und/oder infolge der weiteren Auswahl eines der gruppenspezifischen Leistungsmerkmale eine weitere Anwendung der Datenverarbeitungseinrichtung (PC) und/oder ein Leistungsmerkmal der Kommunikationseinrichtung (PBX, CTIA) aktiviert wird.

10. Verfahren nach einem der vorhergehenden Ansprüche,
**dadurch gekennzeichnet,**
**dass** infolge der Benutzereingabe ein permanent, auf der Datenverarbeitungseinrichtung (PC) laufender Prozess (T) benachrichtigt wird, und dieser Prozess (T) infolge dessen das Aktivieren der Anwendung (APPL) veranlasst.

11. Kommunikationssystem zum Belegen einer Taste (FK) einer Kommunikationsendeinrichtung (EG1)
**dadurch gekennzeichnet,**
**dass** Mittel zur Durchführung des Verfahrens gemäß einem der vorhergehenden Ansprüche vorgesehen sind.

12. Kommunikationsendeinrichtung (EG1) zum Belegen einer Taste (FK) der Kommunikationsendeinrichtung (EG1)
**dadurch gekennzeichnet,**
**dass** Mittel zur Durchführung des Verfahrens gemäß einem der Ansprüche 1 bis 10 vorgesehen sind.

13. Kommunikationsendeinrichtung nach Anspruch 12
**dadurch gekennzeichnet,**
**dass** die Kommunikationsendeinrichtung (EG1) als Telefonapplikation einer Datenverarbeitungseinrichtung (PC) oder als Endgerät für Sprache und/oder Video ausgestaltet ist.

## Claims

1. Method for programming a button (FK) of a communication terminal device (EG1),
wherein an application (APPL) is activated on a data processing device (PC) associated with the communication terminal device (EG1), the activated application (APPL) triggers the display of button programming information for selection for a respective button programming, and as a result of the selection of one of the button programming information displays on the data processing device (PC), the associated button programming is assigned to the button (FK) on the communication terminal device (EG1), **characterised in that** the application (APPL) is activated as a result of a user input at the communication terminal device (EG1), and that as part of activation of the application (APPL), the button information identifying the button (FK) is transmitted to the data processing device.

2. Method according to claim 1, **characterised in that** the button programming constitutes a button function to trigger a performance feature of the communication terminal device (EG1) and/or a communication device (PBX, CTIA) coupled to the communication terminal device.

3. Method according to claim 1 or 2, **characterised in that** the button programming information available for selection for this button (FK) depends on the button information transmitted.

4. Method according to any one of the preceding claims, **characterised in that** as part of the display of button programming information, a field (ADREF) is displayed by the application (APPL) for the input or selection of an address information (RUN01, RUN02) of a further communication terminal device (EG2, EG3), and in addition the address information is assigned to the button (FK) as a result of selection of the corresponding button programming information.

5. Method according to any one of the preceding claims, **characterised in that** the button programming is structured as a destination-selection button function to trigger a connection to a further communication terminal device (EG2, EG3), that in addition an address information (RUN01, RUN02) of the further communication terminal device (EG2, EG3) is assigned to the button (FK), and that on activation of the button (FK), a connection is created to the further communication terminal device (EG1, EG2) by means of the address information (RUN01, RUN02).

6. Method according to any one of the preceding claims, **characterised in that** the button programming is formed as a group button function to trigger a group performance feature for several further communication terminal devices (EG2, EG3) combined into a group, wherein as part of the selection of the corresponding button programming information, address information (RUN01, RUN02) of the further communication terminal device (EG1, EG2) can be entered or selected.

7. Method according to claim 6, **characterised in that** the group performance feature is triggered by activating the button (FK), and as part of the group performance feature, a selection of group-specific performance features for the further communication terminal devices (EG2, EG3) is offered for further selection by the communication terminal devices (EG1).

8. Method according to claim 7, **characterised in that** as a result of the further selection of one of the group-specific features, the address information (RUN01, RUN02) of the further communication terminal devices (EG2, EG3) is detected.

9. Method according to any one of claims 7 or 8, **characterised in that** as a result of triggering of the group performance feature and/or as a result of the further selection of one of the group-specific features, a further application of the data processing device (PC) and/or a performance feature of the communication device (PBX, CTIA) is activated.

10. Method according to any one of the preceding claims, **characterised in that** as a result of the user input, a message is sent to a permanent process (T) running on the data processing device (PC), and as a result this process (T) causes the activation of the application (APPL).

11. Communication system for programming a button (FK) of a communication terminal device (EG1), **characterised in that** means are provided for performance of the method according to any one of the preceding claims.

12. Communication terminal device (EG1) for programming a button (FK) of the communication terminal device (EG1), **characterised in that** means are provided for performance of the method according to any one of claims 1 to 10.

13. Communication terminal device according to claim 12, **characterised in that** the communication terminal device (EG1) is formed as a telephone application of a data processing device (PC) or as a terminal device for voice and/or video.

## Revendications

1. Procédé servant à affecter une touche (FK) d'un équipement terminal de communication (EG1), dans le cadre duquel
une application (APPL) est activée sur un équipement de traitement de données (PC) associé à l'équipement terminal de communication (EG1),
des informations d'affectation de touche pour une affectation de touche respective sont affichées afin de procéder à la sélection par l'application (APPL) activée, et
l'affectation de touche correspondante est attribuée à la touche (FK) au niveau de l'équipement terminal de communication (EG1) suite à une sélection d'une des informations d'affectation de touche affichée au niveau de l'équipement de traitement de données (PC),
**caractérisé en ce**
**que** l'application (APPL) est activée suite à une entrée d'utilisateur au niveau de l'équipement terminal de communication (EG1), et en ce que dans le cadre de l'activation de l'application (APPL), une information de touche, identifiant la touche (FK) est transmise à l'équipement de traitement de données.

2. Procédé selon la revendication 1,
**caractérisé en ce**
**que** l'affectation de touche constitue une fonction de touche servant à déclencher une fonctionnalité de l'équipement terminal de communication (EG1) et/ou d'un équipement de communication (PBX, CTIA) couplé à l'équipement terminal de communication.

3. Procédé selon la revendication 1 ou 2,
**caractérisé en ce**
**que** les informations d'affectation de touche disponibles pour cette touche (FK) aux fins de la sélection sont déterminées en fonction de l'information de touche transmise.

4. Procédé selon l'une quelconque des revendications précédentes,
**caractérisé en ce**
**que** dans le cadre de l'affichage des informations d'affectation de touche, un champ (ADREF) est affiché pour une entrée ou une sélection d'une information d'adresse (RUNO1, RUN02) d'un autre équipement terminal de communication (EG2, EG3) par l'application (APPL),
et en ce que l'information d'adresse est en complément attribuée à la touche (FK) suite à la sélection de l'information d'affectation de touche correspondante.

5. Procédé selon l'une quelconque des revendications précédentes,
**caractérisé en ce**
**que** l'affectation de touche est configurée sous la forme d'une fonction de touche Zielwahl servant à déclencher une liaison avec un autre équipement terminal de communication (EG2, EG3),
en ce qu'en complément une information d'adresse (RUNO1, RUN02) de l'autre équipement terminal de communication (EG2, EG3) est attribuée à la touche (FK), et
en ce que lors de l'actionnement de la touche (FK) au moyen de l'information d'adresse (RUNO1, RUN02) une liaison avec l'autre équipement terminal de communication (EG2, EG3) est établie.

6. Procédé selon l'une quelconque des revendications précédentes,
**caractérisé en ce**
**que** l'affectation de touche est configurée sous la forme d'une fonction de touche de groupes servant à déclencher une fonctionnalité de groupes pour plusieurs autres équipements terminaux de communication (EG2, EG3) rassemblés pour former un groupe, sachant que des informations d'adresse (RUNO1, RUN02) des autres équipements terminaux de communication (EG2, EG3) peuvent être entrées ou sélectionnées dans le cadre de la sélection de l'information correspondante d'affectation de touche.

7. Procédé selon la revendication 6,
**caractérisé en ce**
**que** l'actionnement de la touche (FK) permet de déclencher la fonctionnalité de groupes, et en ce qu'une sélection de fonctionnalités spécifiques à des groupes est proposée pour les autres équipements terminaux de communication (EG2, EG3) par l'équipement terminal de communication (EG1) pour la sélection supplémentaire dans le cadre de la fonctionnalité de groupes.

8. Procédé selon la revendication 7,
**caractérisé en ce**
**que** les informations d'adresse (RUNO1, RUN02) des autres équipements terminaux de communication (EG2, EG3) sont détectées suite à la sélection supplémentaire d'une des fonctionnalités spécifiques aux groupes.

9. Procédé selon l'une quelconque des revendications 7 ou 8,
**caractérisé en ce**
**que** suite au déclenchement de la fonctionnalité de groupes et/ou suite à la sélection supplémentaire d'une des fonctionnalités spécifiques aux groupes, une autre utilisation de l'équipement de traitement de données (PC) et/ou une fonctionnalité de l'équipement de communication (PBX, CTIA) sont activées.

10. Procédé selon l'une quelconque des revendications précédentes,
**caractérisé en ce**
**que** suite à l'entrée de l'utilisateur, un processus (T) exécuté en permanence sur l'équipement de traitement de données (PC) est informé, et en ce qu'en conséquence ledit processus provoque l'activation de l'application (APPL).

11. Système de communication servant à affecter une touche (FK) d'un équipement terminal de communication (EG1),
**caractérisé en ce**
**que** sont prévus des moyens servant à mettre en oeuvre le procédé selon l'une quelconque des revendications précédentes.

12. Equipement terminal de communication (EG1) servant à affecter une touche (FK) de l'équipement terminal de communication (EG1),
caractérisé en
que sont prévus des moyens servant à mettre en oeuvre le procédé selon l'une quelconque des revendications 1 à 10.

13. Equipement terminal de communication selon la revendication 12,
**caractérisé en ce**
**que** l'équipement terminal de communication (EG1) est configuré sous la forme d'une application téléphonique d'un équipement de traitement de données (PC) ou sous la forme d'un appareil terminal pour la voix et/ou la vidéo.
